(19) **Europäisches Patentamt**
**European Patent Office**
**Office européen des brevets**

(11) **EP 4 355 801 B1**

(12) **EUROPEAN PATENT SPECIFICATION**

(45) Date of publication and mention
of the grant of the patent:
**14.01.2026 Bulletin 2026/03**

(21) Application number: **22740543.8**

(22) Date of filing: **09.05.2022**

(51) International Patent Classification (IPC):
***C08G 8/24*** *(2006.01)*  ***C08H 7/00*** *(2011.01)*
***C09J 161/12*** *(2006.01)*  ***C09J 197/00*** *(2006.01)*

(52) Cooperative Patent Classification (CPC):
**C08G 8/24; C08H 6/00;** C09J 161/12

(86) International application number:
**PCT/SI2022/050014**

(87) International publication number:
**WO 2023/055303 (06.04.2023 Gazette 2023/14)**

(54) **NEW PREPARATION PROCESS OF RESOLE RESIN WITH ACTIVATED KRAFT LIGNIN**

NEUES HERSTELLUNGSVERFAHREN FÜR RESOLHARZ MIT AKTIVIERTEM KRAFTLIGNIN

NOUVEAU PROCESSUS DE PRÉPARATION DE RÉSINE RÉSOL AVEC DE LA LIGNINE KRAFT ACTIVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2021 SI 202100181**

(43) Date of publication of application:
**24.04.2024 Bulletin 2024/17**

(73) Proprietor: **Fenolit D.D.**
**1353 Borovnica (SI)**

(72) Inventors:
• **ZIBRET, Nina**
**1000 Ljubljana (SI)**
• **BUKOVEC, Peter**
**1370 Logatec (SI)**
• **ZIBRET, Slavko**
**1000 Ljubljana (SI)**

(74) Representative: **Jersan, Tatjana**
**ITEM d.o.o.**
**Patent and Trademark Agency**
**Resljeva cesta 16**
**1000 Ljubljana (SI)**

(56) References cited:
**EP-A1- 3 783 008    CN-A- 107 699 173**

• **ZHAO MINGZHU ET AL: "Preparation and performance of lignin-phenol-formaldehyde adhesives", INTERNATIONAL JOURNAL OF ADHESION AND ADHESIVES, ELSEVIER, AMSTERDAM, NL, vol. 64, 23 October 2015 (2015-10-23), pages 163 - 167, XP029300264, ISSN: 0143-7496, DOI: 10.1016/ J.IJADHADH.2015.10.010**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Subject of invention

The subject of the invention is a new process for the preparation of resole resin with activated Kraft lignin, which belongs to the field of polymer chemistry and is used as a binder for thermal insulation boards made of stone, mineral and glass wool, and other thermal insulation materials.

### Technical problem

Resole resin is a phenol formaldehyde resin synthesised by alkali-catalysed condensation polymerisation and is widely used in the thermal insulation materials industry. The phenol formaldehyde resin industry is a large consumer of phenol, which is one of the products of petroleum refining. The limited petroleum reserves, the ecological problems associated with petroleum extraction and processing and the toxicity of phenol make it necessary to find alternative sources to replace phenol. One promising substitute for phenol is lignin, which was isolated from wood as early as 1838; see Mémoire sur la congélation des pommes de terre, Huzard (1838), 1795-1871, A. Payen. Lignin is chemically a polyphenol and therefore potentially interesting as a substitute for phenol. Lignin occupies 15-40% of the dry matter in woody plants and constitutes the matrix that ensures the structural stability of plants. Next to cellulose, lignin is the most widely used organic polymer and is currently mainly a by-product of cellulose production.

Some estimates suggest that 50-60 million tonnes of lignin are produced worldwide annually, of which only 2% is not used as fuel for energy production; see XV Meeting of the International Humic Substances Society, Tenerife, 2010, 1-27, P.J. de Wild et al. Thus, large quantities of lignin are available, but problems arise from the high heterogeneity in its composition depending on the origin of the wood mass, the high unreactivity resulting from its complex polymeric structure, and the different processing operations of the wood biomass, which have an impact on the properties of the lignin obtained.

Compared to phenol, lignin is a very complex polyphenolic molecule. As it represents the structure framework of the woody parts of plants in nature, it is, of course, very stable and therefore unreactive. Lignin is an aromatic polymer composed of p-coumaryl, coniferyl and sinapyl alcohol units. The monomeric units are linked via ether and various C-C bonds. Lignins originating from different sources, deciduous trees, conifers, cereals, grasses, etc., differ in the ratio of said three alcohols.

Partial replacement of phenol by lignin is therefore very interesting from an economic and ecological point of view, but the technical problem is to activate the lignin into a sufficiently reactive form to allow reaction with formaldehyde and thus synthesis of the resin with adequate properties.

A technical problem also present in the synthesis of conventional alkali-catalysed resole resin is the precipitation of tetradimer, chemically [bis(4-hydroxy-3,5-dimethylphenol)methane]. In the synthesis of conventional resole resin, typically 10-18% by weight of tetradimer is precipitated; see Phenolic Resins: A Century of Progress, Springer 2010, p. 228, L. Pilato Ed. This solid residue causes not only the loss of some of the liquid resole resin, but also clogging of the piping and formation of solid lining on the reactor walls, and thus additional cleaning costs and lost time in industrial processes.

Emissions of phenol and formaldehyde from thermal insulation panels are also a technical problem, both because of the toxicity of both and for formal reasons, as requirements to reduce emissions are becoming more stringent.

For all these reasons, there is a need for an improved process for the preparation of resole resin by alkaline-catalysed condensation polymerisation, in which lignin is activated in the first step and incorporated into phenol-formaldehyde resin in the second step, so that the incorporated lignin partially replaces the phenol, and the resole resin thus prepared exhibits unlimited water solubility, a reduced amount of tetradimer, and reduced emissions of gases from the thermal insulation panels.

The present invention meets this need, since the subject of the invention is a new process for activating lignin in a first step, prior to the synthesis of resole resin, a new way of synthesising resole resin using the active lignin thus prepared, a reduction in the amount of solid dimer precipitated, unlimited solubility in water and a reduction in the emission of gases from the thermal insulation panels.

### Prior art

The most widely used process for isolating lignin from wood biomass is the Kraft process, in which the wood biomass is treated with sodium hydroxide and sodium sulphide; see Chemical pulping Processes: Sections 4.1-4.2.5. Handbook of Pulp. Wiley-VCH Verlag GmbH 2008, 109-229, H. Sixta et al. In this process, lignin is separated from cellulose and hemicellulose and partially degraded. The properties of lignin depend strongly on the type of wood used and the location where the trees were grown. Kraft lignin is chemically quite inert and must therefore be activated before incorporation into phenolic resin. One of the activation options is phenolation, which was also used in our invention.

The paper; see ACS Sustainable Chem. Eng. 2015, 3, 2526-2532, J. Podschun et al. reports on phenolation of

lignin in $H_2SO_4$ acid medium at 110°C and precipitation of modified lignin with acetone. Phenolation in acid medium is not suitable for further synthesis of resole resin, as this takes place in basic medium.

The paper; see ACS Sustainable Chem. Eng. 2018, 6, 5504-5512, X. Jiang et al. describes phenolation of Kraft lignin in acid medium at 110°C. Only phenolation is described. This phenolation was also carried out in acid and is not applicable to our invention.

The paper; see Eur. J. Wood Prod. 2018, 76, 251-258, M. Ghorbani, F. Liebner, H.W.G. van Herwijnen, P. Solt, J. Konnerth et al., reports on the reaction of methylolation of lignin with formaldehyde in basic medium with NaOH for 5 hours at 55°C. The methylolated lignin was precipitated with adding HCl, centrifuged and dried for subsequent use. This process does not constitute phenolation because it describes the reaction of lignin with formaldehyde, and, in addition, the addition of acid is not an option for the synthesis of resole resin.

The paper; see Polymers, 2018, 10, 1162, P. Solt et al., described alkali-catalysed depolymerization of Kraft lignin in a high-pressure reactor at 250 bar and 320°C. The depolymerisation product was then separated and purified to give a monomer-rich fraction and an oligomer-rich fraction. In this case, the reaction is carried out at very high pressure and temperature and conventional industrial equipment does not allow this reaction to be carried out or would make it very expensive.

The paper; see Ind. Eng. Chem. Res., 2019, 58, 7794-7800, L. Gan in X. Pan., reports on depolymerization and activation of lignin by phenol in alkaline medium at 160°C and phenol:lignin mass ratio of 3:1. After the reaction, the reaction mixture is acidified and the solid phase is separated from the liquid phase. The solid phase consists of phenolated lignin and the liquid phase of lignophenols and organic acids.

All the papers only deal with the activation of lignin.

In the patent; see US 1988/4,769,434, the authors mention problems related to the use of lignin. They mention the low reactivity of lignin as the main problem, which they believe is the reason for the failure of attempts to replace phenol with lignin on an industrial scale. They mention the possibility of separating the components of the 'black mother liquor' according to their molecular weights by ultrafiltration, but themselves conclude that this would be irrational for industrial production. The authors used the mother liquor after dissolving the grass of stem plants in soda and extracted the lignin by acidification. They considered that lignin from stem plants is more reactive, due to the higher number of active sites per unit of phenyl propane.

The patent; see WO 2016/057390 A1 describes preparation of adhesives for the wood industry. The adhesives contain 0.5-15% Kraft lignin, where the lignin has not been preactivated and serves mainly as a filler. In addition, the adhesives contain aldehyde resins, surfactant, alkaline compound and water. The adhesives are typically stable for 24 hours and their stability can be increased by the addition of surfactant.

The patent; see WO 2018/205020 Al, describes a process for the depolymerization of lignin in a reactor at 150-300°C. The reaction is carried out in the presence of a high-boiling-point polyalcohol such as ethylene glycol, propylene glycol, glycerol, and a catalyst such as NaOH, KOH, NaOH/KOH or $H_2SO_4$. The depolymerised lignin is then precipitated by acidification of the reaction mixture and dissolved in acetone. This separates the depolymerised lignin from the insoluble residue. The lignin thus prepared is suitable for the synthesis of various resins.

In the patent; see US 2018/10,160,823 B2, the authors used wheat straw, which is composed of linear low molecular weight polymers which behave like phenolic oligomers. The straw of annual or perennial plants, which constitutes the starting lignocellulosic raw material, is treated in the presence of formic acid containing 5% of acetic acid at a temperature of between 50°C and 115°C. This process is followed by a multi-step separation of the solid and liquid phases. Lignin extracted into organic acids is not chemically modified and contains available phenolic functional groups.

The patent; see US 2019/0233570 A1, by the authors A. Maiorana, S. Maddipatla Venkata, G. Viswanathan, describes a rather complex process of preparing a suspension between a first phenol, lignin and a first catalyst, which is an acidic or basic compound, and heating from 100-200°C to form a dispersion, cooling the dispersion to a temperature of 60-99°C, adding an aldehyde to the dispersion, condensing the dispersion to 1-10% of free aldehyde, cooling this dispersion, adding a second aldehyde and an acidic or basic catalyst. After condensation with a basic catalyst, resole resin with up to 10% of free aldehyde is formed.

The patent; see US 2019/10,266,633 B2 discloses the synthesis of a resin containing 5-hydroxymethyl furfural and a phenolic compound. The phenolic compound is phenol, cardanol and bio-phenol. The resin was cross-linked with tetraethyl ammonium chloride or lignin.

The literature dealing with the problem of solid tetradimer release represents a second group of papers, quite distinct from those mentioned above. Various authors have attempted to reduce the amount of solid tetradimer by various modifications of the synthesis of the basic resole resin.

The patent; see US 1969/3,428,593, by Harold P. Higginbottom and John R. Le Blanc, describes a process for the synthesis of resole resin containing at least 3.0% of free formaldehyde. Such a high concentration of formaldehyde prevents the precipitation of solid tetradimer but greatly increases the free formaldehyde emissions in the production of thermal insulation boards.

In the patent; see US 1977/4,028,367, the author Harold P. Higginbottom describes a complex two-step synthesis of resole resin whereby the crystallization of the tetradimer is inhibited. The first step of the synthesis is carried out in acidic medium under novolac synthesis conditions and the second in alkaline medium. The author mentions that in the synthesised resin the free phenol concentration is less than 2% and the free formaldehyde concentration is less than 2%.

In a similar process, the author W.R. Wallsser; see US 1988/4,757,108 prepared a stable resole resin, without a tetradimer precipitate, in a two-step process, first in acid medium and then neutral or slightly basic medium, with the addition of 20-100% of urea based on the weight of the resole resin.

Patent WO 1998/1998053001 A1 and US 1998/5,795,934 by Claude P. Parks claims the synthesis of resole resin which is stabilised by an alkanolamine or by a combination of a monosaccharide and a disaccharide. This prevents crystallisation of the tetradimer.

In patent WO 1997/1997000900 A1, Gaoming Wu reports the synthesis of resole resin where the catalyst is a highly basic amino alcohol or a combination of an amino alcohol and an alkali hydroxide. The resin is stable to tetradimer precipitation.

In US patent 2005/6,906,130 B2 the authors report a two-step synthesis of resole resin. The first step is an acid-catalysed synthesis of the novolac type and the second step is a base-catalysed synthesis of the resole type. In the resole resin thus prepared, they mention a low concentration of tetradimer, a free phenol concentration below 1.5% and a free formaldehyde concentration above 16%, which is neutralised by the addition of urea before use as a binder.

US patent 2010/7,741,406 describes the preparation of resole resin using alkali sulphite as a catalyst. The authors state that the sulphite reacts with formaldehyde to modify the methyolation and condensation reactions, thereby reducing the amount of precipitated solid tetradimer. The resin thus prepared contains 5-7% of tetradimer and up to 12% of free formaldehyde.

Most papers and patents describe acid-catalysed phenolation of lignin. The lignin activated by an acid catalyst can be used for the synthesis of novolac resin in the following reaction, but it is not suitable for the synthesis of phenolic resin in alkaline medium, since in this case both neutralisation of the acid medium and a further significant increase in the pH of the reactants would be required to produce phenolate, which is the necessary form of phenol in the synthesis of resole resin. Alkaline-catalysed lignin activation experiments invariably use acidification by precipitation of the lignin, which is then considered by the authors to be suitable for further use.

The amount of precipitated tetradimer was reduced by the authors by excessive addition of formaldehyde, which resulted in excessive concentrations of free formaldehyde in the synthesised resin. However, none of the processes described above for reducing the precipitated tetradimer used a combination with activated lignin.

The existing processes do not allow for the simultaneous effective activation of lignin by phenolation, its incorporation into resole resin, the reduction of the amount of solid tetradimer, the complete solubility of the prepared resin in water and the reduction in gaseous emissions from the thermal insulation panels.

Relevant prior art can for example be found in documents CN 107699173 and EP 3783008 where a process for the preparation of resole resin is disclosed.

The technical problem not satisfactorily solved is the activation of lignin by phenolation and its incorporation into resole resin in the same batch, with complete solubility of the synthesised resole resin in water and reduced amount of precipitated tetradimer, and reduced amount of phenol and formaldehyde emissions from the panels prepared from the resole resin according to the invention.

## Field of invention

The primary object of the invention is the preparation of an improved resole resin with activated Kraft lignin. This is a novel process for the preparation of phenol formaldehyde resole resin in which a portion of the phenol can be successfully replaced by lignin. The substitution of phenol by lignin results in resole resin with improved final properties, with lower free components, mainly formaldehyde, but also phenol, thus reducing the consumption of phenol as a feedstock.

The resole resin according to the present invention has improved stability and water solubility compared to the existing conventional lignin-free resole resin. A thermal insulation panel in which the binder is the resole resin according to the present invention exhibits lower formaldehyde emissions and comparable mechanical properties to a thermal insulation panel in which the binder is an existing resole resin from current production.

Compared to the existing resole resin used for thermal insulation binders, the resole resin according to the present invention has lower tetradimer levels in addition to lower formaldehyde emissions. The resole resin according to the present invention has unlimited solubility in water and is stable for up to 30 days.

Tetradimer elimination, emission of free phenol and formaldehyde components, unlimited water solubility and low viscosity remain some of the most important challenges in the industry of phenolic formaldehyde resole resins, both for phenolic resin producers and users. The replacement of phenol by natural sources such as lignin, while improving and optimising all phases of the resole resin synthesis to address these problems, is a constant concern of the industry of phenol formaldehyde resins in ensuring smooth production operations, including saving time in the production of resole resin.

## Background of invention

Phenol formaldehyde resole resins are usually formed by condensation polymerisation of phenol with a molar excess of formaldehyde in the presence of a basic catalyst.

In the resole resins used as binders in thermal insulation wool, the condensation of the polymerisation of phenol and its derivatives with formalin in the presence of a catalyst usually takes place at temperatures between 30°C and 100°C and lasts from 3 to 20 hours.

The formaldehyde/phenol molar ratio can be from 1 to 5. A high ratio allows us to achieve low levels of phenol during the synthesis and the formaldehyde is reduced at the end by known formaldehyde scavengers, most often by the addition of urea. The addition of urea can reduce the proportion of free formaldehyde, but lowering the free formaldehyde reduces the solubility of the tetradimer, which precipitates as a solid white substance and consequently the resins cannot be stored for long periods.

In addition, the precipitation of tetradimer in resole resins is also problematic because the tetradimer is precipitated from the resin as a white crystalline precipitate, which prevents the smooth operation of production, causes clogging of pipelines and filters, and causes the resole resin to lose its properties. Tetradimers cause disruption to both the producers and the consumers of resole resins and thus reduce the usefulness of the resole resins themselves.

Typical resole resins contain a high proportion of free monomers (free phenol and formalin) which are highly volatile and toxic. Attempts to reduce the proportion of emissions to the environment during the resole resin synthesis process itself have been an issue for many years for both manufacturers and users of resole resins.

Both organic and inorganic catalysts can be used in the synthesis of phenol formaldehyde resole resins. Most often, such phenol formaldehyde resole resins are catalysed with sodium or potassium hydroxide or triethylamine (TEA), TEA being highly volatile and toxic.

Most of the resole resins used as binders for thermal insulation wools are catalysed with inorganic catalysts, mainly because of their low cost and non-volatility.

Lignin is rather unreactive, given its chemical structure. Compared to phenol, it has only 0.3 reactive sites on the aromatic ring available for chemical reaction or further condensation with formaldehyde, and it has very high molar masses.

Kraft lignin contains a high proportion of phenolic hydroxyl groups, is hydrophobic at neutral pH and is soluble in an alkaline aqueous solution having a pH greater than 10. Kraft lignin has a molar mass of 4500-6000 g/mol.

Due to the low reactivity of lignin, its direct incorporation into the synthesis of phenol formaldehyde resins requires very long reaction times and high temperatures.

Since we want to use as much lignin as possible as a substitute for phenol, we need to modify its chemical structure. The reactivity of lignin can be increased by activating new reactive sites and by degrading its structure to achieve lower molar masses.

Several techniques are known to activate the functional groups of lignin and by which lignin modified in this way can partially replace phenol in the synthesis of phenol formaldehyde resins. These techniques are methyolation, demethyolation, phenolation, various thermolysis processes and liquefaction. The literature lists various processes for the degradation and optimum activation of lignin, most of which are carried out under acidic conditions and at high temperatures.

However, one of the most promising methods for lignin modification, which takes place under milder conditions, is certainly phenolation. The phenolation reaction can take place in acidic or basic media at about 70°C. Activation occurs by increasing the number of phenolic hydroxyl groups and, in addition, by splitting the ether bonds, the structure of the lignin is degraded, thus reducing the molar mass of the lignin. The lignin thus modified can be incorporated into the further synthesis of phenol formaldehyde resin under both basic and acidic conditions.

## Description of the process of the invention

The invention is a novel process for the synthesis of resole resins described hereinbelow and illustrated on the figures which show:

Figure 1 represents GPC chromatograms of final reference samples and lignin samples; phenolation with methanol, embodiment 5

Figure 2 represents GPC chromatograms of final samples of resins with lignin and the reference sample

Figure 3 represents the $^1$H-NMR spectrum of acid-insoluble acetylated lignin phenolated in the presence of methanol (after vacuum) and the internal standard p-nitrobenzaldehyde dissolved in $CHCl_3$-d with the signal peaks and integrals marked.

**Detailed description of the syntheses of resole resin with activated lignin**

Polymerisation between phenol, lignin and formaldehyde is carried out using an inorganic catalyst solution of sodium or potassium hydroxide, preferably sodium hydroxide.

The reaction takes place at temperatures between 55 and 70°C and lasts from 4 to 18 hours. The amount of catalyst varies during the lignin activation part and is in the range of 3 to 9% by weight, preferably about 5% by weight.

Our work has focused on the use of technical Kraft lignin, which is mainly extracted from deciduous trees or so-called softwood. The average molar mass of the Kraft lignin we used is quite high, between 4500 and 6000 g/mol, which presents a unique challenge as the average molar mass of the final resole resins used as binders in glass and stone wool is between 600 and 1300 g/mol.

It is desirable that the synthesised resole resin retains a low molar mass of phenol formaldehyde polymer, as this allows the resole resin to have good properties and to be stable even after several weeks.

The process for the preparation of resole resin with activated Kraft lignin is divided into two parts. The first part consists of the activation of lignin by phenolation and the second part consists of the synthesis of a low molar mass phenol formaldehyde polymer. Both the phenolation and the subsequent synthesis of the phenol formaldehyde polymer are carried out at relatively low temperature in a basic medium.

Our work focuses on lower temperature processes in alkaline media.

The process for the preparation of resole resin according to the invention comprises the following steps:

I) Activation of Kraft lignin by phenolation with the addition of an inorganic catalyst of sodium or potassium hydroxide, wherein the phenol concentration is between 17 and 22% by weight based on the total weight of the added reaction components, preferably 18% by weight, and the activation of the lignin is carried out over a period of 1 to 6 hours, preferably 3 hours, at a temperature of between 60°C and 100°C, preferably at a temperature of about 70°C;

II) Synthesis of a phenol formaldehyde resole resin with activated Kraft lignin, wherein formalin is gradually added to the activated lignin mixture of step I) in an amount such that the molar ratio of formaldehyde to phenol is between 2.3-3.6, preferably 3.2, and the synthesis is carried out at a temperature of 55-70°C, preferably 60°C, for a period of 4-18 hours, preferably 6-8 hours, wherein after the synthesis of the resole resin has been achieved, 15-19% by weight of urea is added to the resole resin based on the total weight of the added reaction components, preferably 17% by weight of urea, to a free phenol content in the resin of less than 1% by weight, preferably less than 0.4% by weight, and wherein step I and step II are carried out in the same reactor.

The Kraft lignin used has a molar mass of 4500-6000 g/mol, preferably 4500 g/mol and 60-68% by weight of dry matter.

Preferably, the inorganic catalyst is sodium hydroxide, preferably a 50% by weight aqueous NaOH solution.

Optionally, Kraft lignin can be activated in water or in an organic solvent - methanol. The weight percentage of methanol is in the range of 10-12% by weight based on the total weight of the added reaction components.

When water or methanol is used in the process, the water or methanol is optionally partially or completely removed after the activation of the Kraft lignin, i.e. before step II, by vacuum distillation.

The NaOH or KOH catalyst may be added completely in step I, or it may be added gradually, i.e. in step I and step II, wherein it is used in step I to activate the lignin and in step II as an addition of the catalyst for the synthesis of the resole resin. The amount of NaOH used is between 1.2-1.6% by weight based on the total weight of the reaction components added and 6-8% by weight based on the phenol.

In cases where sodium or potassium hydroxide is added to a known amount of phenol, a salt or phenolate is formed. Lignin is gradually added to the solution thus prepared. When the lignin has been dosed, water or an organic solvent is optionally added to the mixture. Lignin activation is monitored by viscosity measurement, phenol content, diethyl ether extraction, infrared spectroscopy, gel permeation chromatography, liquid chromatography-mass spectrometry and gas chromatography-mass spectrometry.

During lignin activation, the phenol fraction increases with time, indicating the formation of phenolic lignin components. Monitoring by liquid mass spectroscopy reveals characteristic lignin fragments formed during the demethylolation of lignin. The viscosity of the phenolated lignin varies depending on the amount of lignin added, the amount of solvent and the lignin activation process.

For the synthesis of the resin in the embodiments, Kraft lignin with 65-69% by weight of dry matter and a molar mass between 4500 and 6000 g/mol, phenol 99% by weight, formalin concentrations between 47 and 53% by weight, NaOH 50% by weight, water and methanol were used.

The molar ratio of phenol to formaldehyde is between 2.4 and 3.6 mol of formaldehyde to 1 mol of phenol, with phenol and formaldehyde accounting for between 30 and 40% by weight of the total dry matter added to the reaction mixture. Lignin accounts for between 9-11% by weight of the total weight of the added reaction components and 52-54% by weight of phenol.

### Comparative example - Reference sample 1

To a glass flask equipped with a stirrer, thermometer and refrigerator, sodium hydroxide (50% by weight, 18 g) and formalin (51% by weight, 320 g) are added to a solution of phenol (99% by weight, 160 g) and water (141 g). The synthesis is carried out for 6 hours at 60°C to a free phenol content of 0.3% by weight and a formaldehyde content of 6.5% by weight. At the end, urea is added to the resin to reduce the formaldehyde. The resole resin sample is measured for tetradimer content, free components, water solubility, emissions from the resole resin and comparative mechanical properties with respect to resole resins with lignin. Such a resole resin is stable for only 6 days and then loses its unlimited water solubility, with the tetradimers precipitating after 4-5 days. The results of reference sample 1 (RF1) are summarised in Table 1. The resole resin prepared in this way is used as a reference sample for comparison with other experiments and examples with activated lignin.

### Comparative example - Reference sample 2

As a second reference sample, the resole resin was used, which is our regular product. The resin is used as a binder by well-known manufacturers of thermal stone and glass wool insulation such as Knauf, Ursa and Rockwool. The resole resin has comparable final free components to the reference sample RF1; phenol $\leq$ 0.5% by weight, formaldehyde $\leq$ 0.1% by weight, with a dry matter content between 50 and 53% by weight and a viscosity of around 30 mPas. The resole resin loses its unlimited solubility within 14 days. The results of RF2 sample are summarised in Table 1.

*Table 1: Summarized final results of the reference sample cases considered*

| Sample | P [%] | Fo [%] | dry matter [%] | η [mPas] | stability (day) |
|--------|-------|--------|----------------|----------|-----------------|
| RF1 | 0.3 | 0.3 | 53 | 22 | 6 |
| RF2 | 0.5 | 0.1 | 52 | 30 | 10 |
| LEGEND OF ABBREVIATIONS: P - phenol, Fo - formaldehyde, dry matter - dry matter, stability - unlimited water solubility of resin | | | | | |

### Embodiments

### Embodiment 1: Activation of lignin in phenolate with added water

To a glass flask equipped with a stirrer, thermometer and refrigerator, phenol (99% by weight, 160 g), water (142 g) and sodium hydroxide (50% by weight, 26 g) are dosed. The catalyst is added in excess and is sufficient for both the lignin activation process and the subsequent synthesis of the resole resin. Lignin (67% by weight, 125 g) is gradually added to the reaction mixture at a temperature of 75°C, which is heated due to the strong exothermic reaction. The total amount of lignin is added in 45 minutes. Activation of the lignin lasts 3 hours at 75°C. After lignin activation is complete, the reaction mixture is cooled to 60°C and at this temperature all the formalin (51% by weight, 320 g) is added gradually over 1 hour. The synthesis is carried out for 6 hours and 50 minutes at 60°C to a free phenol content of 0.4% by weight and a formaldehyde content of 5.5% by weight. After the synthesis is complete, urea is added to the resole resin to reduce the formaldehyde content. The results are summarised in Table 2, sample S1. Resin S1A is prepared in the same way, adding KOH instead of NaOH. The resin has a longer stability.

Resin S1 contains a low concentration of free components, comparable to the reference samples. Compared to the reference samples, S1 has a 2-2.5 times longer unlimited solubility and is stable - not determined for S1.

*Table 2: The summarized final results of Embodiment 1, where lignin activation is carried out in sodium or potassium phenolate with added water.*

| Sample | P [%] | Fo [%] | dry matter [%] | η [mPas] | stability (day) |
|--------|-------|--------|----------------|----------|-----------------|
| S1 | 0.4 | 0.16 | 53 | 45 | 20 |
| S1A | 0.4 | 0.16 | 52 | 29 | >25 |

**Embodiment 2: Activation in phenolate without added water**

To a glass flask equipped with a stirrer, thermometer and refrigerator, phenol (99% by weight, 160 g) and sodium hydroxide (50% by weight, 26 g) are dosed. Lignin (67% by weight, 125 g) is gradually, over 1 hour, added at a temperature of 75°C. Activation of the lignin lasts 3 hours at 75°C. After lignin activation is complete, the mixture is cooled to 60°C, water (136 g) is added and then the formalin (52.6% by weight, 311 g) is added gradually over 1 hour. A further synthesis is carried out for 6 hours at a temperature of 60°C to a free phenol content of 0.4% by weight. The results are summarised in Table 3, sample S4.

The embodiment is repeated for sample S6, where lignin activation lasts 5 hours at a temperature of 75°C, and for sample S8, where lignin activation lasts 3 hours at 70°C.

From the results in Table 3, it is clear that the 5°C difference in temperature and the activation time longer by 2 hours do not affect the final resole resin results.

The resole resins prepared in this way have a low viscosity and low free components, phenol about 0.3% by weight and formaldehyde 0.2% by weight. The viscosity of sample S6 at 20°C is 34 mPas. The resole resins have unlimited solubility up to 35 days.

Table 3: The final result of Embodiment 2, S4, S6 and S8, where lignin activation is carried out in phenolate with no water added

| Sample | P [%] | Fo [%] | dry matter [%] | η [mPas] | lignin activation (h) | activation T (°C) | stability (day) |
|---|---|---|---|---|---|---|---|
| S4 | 0.3 | 0.4 | 52 | 45 | 3 | 75 | 30 |
| S6 | 0.2 | 0.17 | 52 | 34 | 5 | 75 | 21 |
| S8 | 0.4 | 0.18 | 53 | 38 | 3 | 70 | 35 |

**Embodiment 3: Activation of lignin with a distributed amount of catalyst**

Embodiment 2 is the starting point. Lignin activation is carried out in a solution of phenol (99% by weight 160 g) and water (113 g). The amount of catalyst is distributed and added in two portions. Namely: 16 g of 50% by weight NaOH is used for lignin activation (68% by weight, 123 g) and 10 g of 50% by weight NaOH is used as an additive in the further synthesis of the resole resin. Activation of the lignin lasts 3 hours at a temperature of 75°C, a further synthesis of the resole resin is carried out for 8 hours at a temperature of 60°C or to a free phenol content of 0.4% by weight. A slight increase in the viscosity of the reaction mixture is observed when the lignin is activated. At the end, urea is added to the resin to reduce the formaldehyde.

The results are summarised in Table 4, the sample is designated as S9.

Table 4: The summarized final results of Embodiment 3, where lignin activation is carried out in sodium phenolate with a distributed amount of catalyst.

| Sample | P [%] | Fo [%] | dry matter [%] | η [mPas] | Activation time (h) | stability (day) |
|---|---|---|---|---|---|---|
| S9 | 0.3 | 0.24 | 53 | 50 | 3 | n.a. |
| S10 | 0.3 | 0.8 | 49 | 41 | 6 | n.a. |
| S13 | 0.3 | 0.23 | 50 | 27 | 4 | >24 |
| S17 | 0.4 | 0.3 | 55 | 48 | 6 | 20 |

Embodiment 3 is also the starting point for samples S10, S13 and S17, where the quantities of feedstock and the ratios between them remain the same, but the lignin activation time is varied, being 3 hours for S9, 6 hours for S10, 4 hours for S13 and 6 hours for S17 at a temperature of 75°C. A further synthesis of the resole resin is carried for up to 7 hours at a temperature of 60°C or to a free phenol content of 0.4% by weight. The results show that the longer lignin activation time and the shorter synthesis time have no significant impact on the final characteristics of the resin.

Glass wool prepared with resin with lignin S10 has lower formaldehyde emissions than the reference sample RF1, as shown in Table 5. The free formaldehyde emissions from the samples of resole resins with lignin are lower compared to the reference samples, with values below 0.01% by weight.

*Table 5: Formaldehyde emissions from glass wool samples prepared from resole resin with lignin S10 and reference resin 1*

| Sample | m [g] | formaldehyde emission [mg/Kg] | formaldehyde emission [%] |
|---|---|---|---|
| **S10** | 3.25 | 83 | 0.008 |
| **RF1** | 3.27 | 129 | 0.013 |

Resole resins S13 and S17, where lignin activation takes place in sodium phenolate with the addition of water and a distributed amount of sodium hydroxide, are stable for more than three weeks (Table 4), while S17 has comparable mechanical strengths to the reference resin (Table 6) and a low content of free components and tetradimers, which do not precipitate from the resin even after several weeks (Table 9).

*Table 6: Mechanical strengths of resole resin with and without lignin*

| Sample | Force (N/cm$^2$) |
|---|---|
| S17 | 189 |
| RF1 | 188 |

**Embodiment 4: Lignin activation in an aqueous phenolate solution using vacuum**

Lignin activation is similar to that of Embodiment 3. To a glass flask equipped with a stirrer, thermometer and refrigerator, phenol (99% by weight, 320 g), water (111 g) and sodium hydroxide (50% by weight, 32 g) are dosed. Lignin (68% by weight, 247 g) is gradually, over 1 hour, added at a temperature of 75°C. Activation of the lignin lasts 3 hours at a temperature of 75°C. After completion of phenolation, the reaction mixture is removed by vacuum distillation of the water and part of the phenol, which is taken into account in the further synthesis. Formalin (53% by weight, 605) and NaOH (50% by weight, 20 g) are then added over a period of 1 hour at 60°C. The synthesis is carried out for 6 hours at a temperature of 60°C to a free phenol content of 0.4% by weight. After the synthesis is complete, also urea is added to the resin to reduce the formaldehyde content. The results are summarised in Table 7, sample S16.

*Table 7: The summarized final results of Embodiment 4, lignin activation is carried out for 3 hours in sodium phenolate using vacuum distillation*

| Sample | P [%] | Fo [%] | dry matter [%] | η [mPas] | stability (day) |
|---|---|---|---|---|---|
| **S16** | 0.3 | 0.2 | 55 | 63 | 20 |

**Embodiment 5: Lignin activation using methanol and vacuum**

To activate lignin, 4.5% by weight NaOH relative to phenol (50% by weight, 16 g) is added to phenol (99% by weight, 160 g) at a temperature between 50 and 60°C. The reaction is exothermic, sodium phenolate is formed. Water is added to the solution and lignin (68% by weight, 126 g) is added at a temperature of 70°C. The lignin addition process takes one hour. When all the lignin is in the reaction mixture, the mixture is cooled to 60°C and methanol (48 g) is added. Stir vigorously for three hours at a temperature of 70°C under reflux. After completion of phenolation, vacuum distillation is used to remove the portion of the added methanol from the reaction mixture. The vacuum distillation, which is carried out at low temperature, also removes a small amount of phenol, which is taken into account in the subsequent process. During lignin activation, the phenol content is monitored, the viscosity is measured and changes are monitored by FTIR and GPC. After lignin activation is completed, formalin (53% by weight, 302 g) is added over one hour at a temperature of 60°C, then water is added and a second portion of sodium hydroxide (50% by weight, 10 g), and the synthesis is continued at a temperature of 60°C to a free phenol content of 0.4% by weight. Finally, urea is added - sample S12.

The process is repeated for samples S14, S16, S18, S19. The results are summarised in Table 8.

The resole resins prepared in this way have low final phenol and formaldehyde values and lower tetradimer contents compared to the reference resole resins, but higher viscosities compared to other resole resins without added methanol.

*Table 8: Final result of Embodiment 5, lignin activation takes place in the presence of organic solvent-methanol*

| Sample | P [%] | Fo [%] | dry matter [%] | η [mPas] | stability (day) |
|---|---|---|---|---|---|
| S12 | 0.2 | 0.23 | 56 | 111 | 14 |
| S14 | 0.3 | 0.19 | 56 | 84 | 20 |
| S15 | 0.4 | 0.06 | 52 | 58 | 10 |
| S18 | 0.7 | 0.06 | 55 | 100 | n.a. |
| S19 | 0.8 | 0.07 | 55 | 144 | n.a. |
| S20 | 0.5 | 0.16 | 51 | 37 | n.a. |

**Embodiment 6** - **Lignin activation using methanol and without vacuum**

Embodiment 5 is the starting point. Sample S20 is synthesised under the same synthesis conditions with the same amounts of feedstock, but without the use of vacuum, yielding comparable final phenol and formaldehyde values and a lower viscosity of the resin (Table 8).

**Proportion of tetradimers**

Table 9 shows the tetradimer mass proportions in the different resins synthesised. The resins synthesised with lignin had a lower proportion of tetradimers than those synthesised without lignin. The resole resins with lignin addition appear to have lower mass proportions of tetradimers at comparable final free phenol and formaldehyde components compared to the reference samples. In addition, the resole resins with the addition of lignin S1, S1A, S4, S6, S8, S12, S13, S14, S16 and S17 remain indefinitely soluble for a longer time than the reference samples, while S4, S6 and S13 are stable for up to four weeks or more.

*Table 9: Mass proportions of tetradimers in resole resins*

| Resin name | Mass proportion of tetradimer (%) |
|---|---|
| resin with lignin S13; embodiment 3 | 6.0 |
| resin with lignin S14; embodiment 5 | 5.6 |
| resin with lignin S15; embodiment 5 | 6.3 |
| resin with lignin S16; embodiment 4 | 5.7 |
| resin with lignin S18; embodiment 5 | 4.7 |
| resin with lignin S19; embodiment 5 | 4.9 |
| resin with lignin S20; embodiment 5 | 4.6 |
| RF1 | 11.8 |
| RF2 | 11.4 |

**Molar masses**

A comparison of the chromatograms of the resole resins with lignin S14, S15, S18, S19 and S20 prepared with methanol (Embodiment 5) and the reference resole resins without lignin is shown in Figure 1, where the GPC chromatograms of S15 (a), S19 (b), S18 (c), S20 (ĉ), S14 (d) and the reference samples R2 (e) and R1 (f) are presented. The comparison shows that for the resole resins with lignin, a peak is observed at retention times between 12 and 14 min, which belongs to the lignin part of the polymer that is bound or incorporated into the resole resin structure, wherein in this part the characteristics of the polymer do not differ from those of the reference samples. It can be observed from the GPC chromatograms in Figure 1 that the lignin has incorporated into the final polymer and that in the phenol part, at lower retention times, there are no significant differences with respect to the reference samples.

Figure 2, where the GPC chromatograms of the final samples of the resins with lignin and the reference sample (R2 - resin without lignin (lines and dots), S17 (solid line), S16 (dashed lines) and S15 (dots) are presented, and where only the phenol part of the structure of the resole polymers can be seen, clearly shows that the molar masses of the resole resins with lignin are comparable to those of the reference samples.

### Proportion of end groups in phenolated lignin

Phenolated lignin S19 (phenolation with methanol, Embodiment 5) was extracted and analysed by NMR before the addition of formaldehyde. The integrals of the aliphatic and aromatic protons of the $^1$H NMR spectrum in Figure 3 make us conclude that the ratio of aromatic to aliphatic groups in phenolated lignin S19 is the same as in the control. The control is the lignin extracted immediately after the addition of all chemicals. However, from the calculation of the number of functional OH groups according to equation 1, it can be concluded that phenolated lignin S19 contains 15 mmol/g of lignin of functional groups, which is by 15% more reactive functional OH groups as well as $OCH_3$ groups/g of lignin than the control. This means that it could be 15% more reactive than the control.

### Analytical methods for the measurement of resole resin parameters

### Solubility in water

10 g of resin is added to distilled water at 25°C. The resin has unlimited solubility if 250 mL of distilled water can be added to 10 g of resin without it becoming turbid. Water solubility is an important parameter for resins used in the thermal insulation binders industry, as users dilute the resin with water to a dry matter of 20% by weight before use. The prepared solution must remain clear, without turbidity, as this is the only way to ensure good properties when coating glass/rock fibres.

### Free phenol

The free phenol content is measured by gas chromatography, which is mainly used for phenol determination in the phenolic resin industry. The method monitors the trend of the free phenol decrease during the synthesis process and determines the final phenol levels in the resin. It is desirable that the free phenol values in the final sample are as low as possible, which results in lower phenol emissions from the product.

### Free formaldehyde

The free formaldehyde content is determined by the standard titration method with hydroxylamine. The result indicates the percentage of unreacted formaldehyde remaining after the synthesis has completed. The lower the levels of free formaldehyde in the sample, the lower the emissions from the product.

### Dry matter

The dry matter content of phenol-formaldehyde resins is determined by heating (drying) 3 g of the resole resin for one hour at 135°C. Under these conditions, some of the volatiles are released from the resin and some are reacted. The dry matter content of the nonvolatile residue is calculated from the difference in the weighted-in quantities.

### GPC/SEC

The molar mass of lignin and phenol-formaldehyde polymer is determined by gel permeation chromatography. The samples are dissolved in DMF supplemented with LiCl and filtered. The HPLC apparatus used is a Perkin -Elmer Series 200 with built-in RI detector and Agilent Polar Gel-L150x3mm chromatographic column and PhenomenexGuard 4x3mm pre-column. Resole resin samples are also extracted in THF and filtered. The HPLC apparatus used is an Agilent 1200 series with built-in RI detector, a set of two Agilent PLgel chromatography columns (5$\mu$m, 300 x 7.5 mm): 2 x Mixed D and a Phenomenex Guard 4x3mm pre-column.

### Determination of formaldehyde emissions

Formaldehyde emissions are determined using the VW bottle method according to standard PV 3925, which is used to trap formaldehyde emissions from cured resin. The emitted formaldehyde content was measured using a UV-VIS Prekin Elmer Lambda 12 spectrophotometer at a wavelength of 412 nm. A calibration curve of the product of the Hantzsch reaction between formaldehyde, ammonia and acetyl acetone in acid medium was prepared. The curve was prepared with standard solutions of formaldehyde, acetyl acetone, ammonium acetate and acetic acid. 3 g of the sample was placed in a filter bag and suspended from a metal hook in a 500 mL polypropylene bottle filled with 50 mL deionised water. The sample bottle was placed in a fan oven at 60°C for 3 h and at room temperature for 1 h. The emission values of the resins with and without lignin are given in Table 5.

Content of tetradimers, bis(4-hydroxy-3,5-dimethylphenolphenol)methane-tetradimer in phenol-formaldehyde resins

The tetradimer proportion was determined by high-pressure liquid chromatography. The column used was an Eclipse XDB C18 and had an inner diameter of 4.6 mm and a length of 150 mm. The temperature of the column room during the measurement was 40°C. The mobile phases used were 0.1 M HCOOH dissolved in MQ water and acetonitrile. The flow rate was 0.75 mL/min. A calibration curve with purified tetradimer was prepared. This was done using 2,4,6-trimethylphenol as an internal standard.

The flow rate was 0.75 mL/min and the method was gradient elution with the following phase conditions defined in Table 10.

Table 10: Phase conditions of the mobile phase in the gradient elution method used

| Time [min] | ACN [%] | 0.1 M HCOOH in MQ water [%] |
|---|---|---|
| 0 | 10 | 90 |
| 3 | 10 | 90 |
| 9 | 30 | 70 |
| 15 | 50 | 50 |
| 26 | 30 | 70 |
| 28 | 10 | 90 |

**Measurement of mechanical properties of resole resins**

The mechanical properties of the resole resin are measured using a Zwick device, which measures the force on sand sticks. To prepare the sand sticks, 400 g of sand and 16 g of resin were mixed. The homogeneous mixture is put in a mould in the shape of sticks and the mould is placed in a preheated oven at 220°C for 1 h 15 min. The mechanical strength of the sand sticks thus prepared is measured (Table 6).

**Method for studying the structure of phenolated lignin by NMR spectroscopy**

Lignin was phenolated according to the methanol (S19) addition method for 3 hours at 85°C, then the pressure was reduced to 0.2 bar using a water pump to remove the methanol. Representative samples were taken before the lignin activation process, after the activation process and after vacuum distillation. All samples were purified before analysis by extraction as described in the paper, see Ind. Eng. Chem. Res., 2019, 58, 19, 7794-7800, L. Gan and X. Pan, i.e., to remove free phenol. 2 g of sample was added to 30 ml milli q water and 30 ml diethyl ether and the pH was lowered to 1 with concentrated HCl. The mixture was vacuum filtered through filter paper (Sartorius, Quantitative Grade 391) with a particle size retention of 2-3 $\mu$m. The acid-insoluble lignin was dried at 40°C for 16 hours by blowing. The dry lignin samples were determined for free phenol using a Perkin Elmer Clarus 580 gas chromatograph (GC-FID) according to the standard method SIST EN ISO 8974:2002.

Lignin was acetylated according to the method described in J. Agric. Food Chem. 2006, 54, 5806-5813, X. Pan et al. The acid-insoluble lignin was dissolved in 6 ml of pyridine-acet anhydride (1/1, v/v) and left for 72 h protected from light at room temperature. The solution was then added dropwise to 120 mL of ice-cold water with 1 mL of concentrated HCl while stirring constantly. The lignin was filtered under vacuum and dried at 40°C by blowing. FTIR spectra were recorded and all OH groups were confirmed to be acetylated.

Following the method described in J. Agri. F. Chem. 2006, 54, 16, 5806-5813, X. Pan et al., the content of functional groups of acetylated lignin was determined together with 5 mg of internal standard (p-nitro benzaldehyde). The samples were dissolved in 0.6 ml $CHCl_3$-d at 25°C and $^1$H NMR spectra were recorded with a 600 MHz Avance Neo spectrometer (Bruker). The spectra were processed with the Bruker TopSpin 3.6.3 software. The amount of functional groups/g lignin (F) was calculated according to Equation 1:

$$F(\text{mmol/g of lignin}) = \frac{\dfrac{I_F}{3} \times \dfrac{4}{I_{NBA}} \times \dfrac{W_{NBA}}{151} \times 1000}{W_L - \dfrac{I_{Ac}}{3} \times \dfrac{4}{I_{NBA}} \times \dfrac{W_{NBA}}{151} \times 42}$$

$I_F$ represents the sum of the integrals of the functional groups ($\delta$ 4.10-3.10 ppm for CH$_3$O, $\delta$ 2.50-2.17 ppm for the acetyl groups on the aromatic moiety and $\delta$ 2.17-1.70 ppm for acetyl groups on the aliphatic part of lignin), $I_{NBA}$ is the proton integral of p-nitro benzaldehyde ($\delta$ 8.4-8.36, 8.08-8.04 ppm), $W_{NBA}$ is the mass of p-nitro benzaldehyde, $W_L$ is the mass of lignin, and $I_{AC}$ is the proton integral of all the acetyl groups of the aromatic and aliphatic moieties ($\delta$ 2.50-1.70 ppm). The number of the functional OH groups was calculated according to Equation 1. Here, the chemical shifts of the protons of the OCH$_3$ groups are at 3.1-4.1 ppm, those of the acetyl group on the aromatic moiety are at 2.17-2.5 ppm and those of the acetyl group on the aliphatic moiety are at 1.7-2.17 ppm. The ratio of aliphatic to aromatic acetylated OH groups was calculated from the ratio of integrals of 2.5-1.7 ppm for the acetylated aromatic OH group and 2.17-1.7 ppm for the acetylated aliphatic OH group (see Figure 3).

**Claims**

1. A process for the preparation of resole resin with activated Kraft lignin by alkaline-catalysed condensation polymerisation, in which Kraft lignin is activated in the first step and incorporated into phenol-formaldehyde resin in the second step, so that the incorporated lignin partially replaces the phenol, the process including the following steps:

   I) Activation of Kraft lignin with a molar mass of 4500-6000 g/mol and 60-68% by weight of dry matter by phenolation with the addition of an inorganic catalyst of sodium or potassium hydroxide, wherein the phenol concentration is between 17 and 22% by weight based on the total weight of the added reaction components, and wherein the activation of the lignin is carried out over a period of from 1 to 6 hours, at a temperature of between 60°C and 100°C;
   II) Synthesis of a phenol formaldehyde resole resin with activated Kraft lignin, wherein formalin is gradually added to the activated lignin mixture of step I) in an amount such that the molar ratio of formaldehyde to phenol is between 2.3-3.6, and the synthesis is carried out at a temperature of 55-70°C, for a period of 4-18 hours, wherein after the synthesis of the resole resin has been achieved, 15-19% by weight of urea is added based on the total weight of the resole resin,
   wherein the inorganic catalyst is added completely in step I, or the inorganic catalyst is added gradually in step I and step II, wherein in step I the inorganic catalyst is used to activate the lignin and in step II as an addition of the catalyst for the synthesis of the resole resin,
   wherein the amount of inorganic catalyst used is between 1.2-1.6% by weight based on the total weight of the reaction components added and 6-8% by weight based on the phenol,
   wherein a resole resin with a free phenol content of less than 1% by weight measured by gas chromatography, with unlimited solubility in water at 25°C, determined as referred to in the description by adding 250 mL of distilled water to 10 g of resin without resole resin becoming turbid, is obtained,
   and wherein step I and step II are carried out in the same reactor.

2. Process according to claim 1, **characterized in that** step I further includes the use of water or methanol, wherein the weight percentage of methanol is in the range of 10-12% by weight based on the total weight of the added reaction components, and wherein water or methanol is partially or completely removed after the activation of the Kraft lignin, that is before step II, by vacuum distillation.

3. Process according to the preceding claims, **characterized in that** the inorganic catalyst is sodium hydroxide, preferably a 50% by weight aqueous NaOH solution.

4. Process according to the preceding claims, **characterized in that** the lignin activation in step I is carried out for 3 hours at a temperature of 70°C, wherein the concentration of phenol is 18% by weight based on the total weight of the added reaction components.

5. Process according to the preceding claims, **characterized in that** in step II the molar ratio of formaldehyde:phenol is 3.2 and the synthesis is carried out at a temperature of 60°C for a period of between 6 and 8 hours.

6. Process according to the preceding claims, **characterized in that** 17% by weight of urea is added to the resole resin after the completion of the resole resin synthesis.

7. Process according to the preceding claims, **characterized in that** the free phenol content in the resin is lower than 0.4% by weight.

**Patentansprüche**

1.  Verfahren zur Herstellung von Resolharz mit aktiviertem Kraft-Lignin durch alkalisch katalysierte Kondensationspolymerisation, bei dem im ersten Schritt Kraft-Lignin aktiviert und im zweiten Schritt in Phenol-Formaldehyd-Harz eingearbeitet wird, so dass das eingebaute Lignin das Phenol teilweise ersetzt, wobei das Verfahren die folgenden Schritte umfasst:

    I) Aktivierung von Kraft-Lignin mit einer molaren Masse von 4500-6000 g/mol und 60-68 Gew.-% Trockensubstanz durch Phänolierung unter Zugabe eines anorganischen Katalysators von Natrium- oder Kaliumhydroxid, wobei die Phenolkonzentration zwischen 17 und 22 Gew.-%, bezogen auf das Gesamtgewicht der hinzugefügten Reaktionskomponenten, beträgt, und wobei die Aktivierung des Lignins über einen Zeitraum von 1 bis 6 Stunden bei einer Temperatur zwischen 60°C und 100°C durchgeführt wird;
    II) Synthese eines Phenol-Formaldehyd-Resolharzes mit aktiviertem Kraft-Lignin, wobei Formalin stufenweise zu der aktivierten Ligninmischung aus Schritt I) in einer solchen Menge zugegeben wird, dass das Molverhältnis von Formaldehyd zu Phenol zwischen 2,3-3,6 liegt und die Synthese bei einer Temperatur von 55-70°C für einen Zeitraum von 4-18 Stunden durchgeführt wird, wobei, nachdem die Synthese des Resolharzes erreicht wurde, 15-19 Gew.-% Harnstoff, bezogen auf das Gesamtgewicht des Resolharzes, zugegeben werden,
    wobei der anorganische Katalysator in Schritt I vollständig zugegeben wird oder der anorganische Katalysator schrittweise in Schritt I und Schritt II zugegeben wird, wobei in Schritt I der anorganische Katalysator zur Aktivierung des Lignins und in Schritt II als Zugabe des Katalysators zur Synthese des Resolharzes verwendet wird,
    wobei die eingesetzte Menge an anorganischem Katalysator zwischen 1,2-1,6 Gew.-%, bezogen auf das Gesamtgewicht der zugegebenen Reaktionskomponenten, und 6-8 Gew.-%, bezogen auf das Phenol, beträgt,
    wobei ein Resolharz mit einem Endphenolgehalt von weniger als 1 Gew.-%, mit unbegrenzter Löslichkeit in Wasser bei 25°C, erhalten wird, wie in der Beschreibung durch Zugabe von 250 ml destilliertem Wasser zu 10 g Harz ohne Trübe von Resolharz bestimmt wurde,
    und wobei Schritt I und Schritt II in demselben Reaktor durchgeführt werden.

2.  Verfahren nach Anspruch 1, **dadurch gekennzeichnet, dass** Schritt I ferner die Verwendung von Wasser oder Methanol beinhaltet, wobei der Gewichtsprozentsatz von Methanol im Bereich von 10-12 Gew.-%, bezogen auf das Gesamtgewicht der hinzugefügten Reaktionskomponenten, liegt und wobei Wasser oder Methanol nach der Aktivierung des Kraft-Lignins, d. h. vor Schritt II, durch Vakuumdestillation teilweise oder vollständig entfernt wird.

3.  Verfahren nach den vorhergehenden Ansprüchen, **dadurch gekennzeichnet, dass** der anorganische Katalysator Natriumhydroxid, vorzugsweise eine 50 gew.-% ige wässrige NaOH-Lösung ist.

4.  Verfahren nach den vorhergehenden Ansprüchen, **dadurch gekennzeichnet, dass** die Ligninaktivierung in Schritt I 3 Stunden bei einer Temperatur von 70°C durchgeführt wird, wobei die Phenolkonzentration 18 Gew.-%, bezogen auf das Gesamtgewicht der zugesetzten Reaktionskomponenten, beträgt.

5.  Verfahren nach den vorhergehenden Ansprüchen, **dadurch gekennzeichnet, dass** in Schritt II das Molverhältnis von Formaldehyd:Phenol 3,2 beträgt und die Synthese bei einer Temperatur von 60°C für einen Zeitraum zwischen 6 und 8 Stunden durchgeführt wird.

6.  Verfahren nach den vorhergehenden Ansprüchen, **dadurch gekennzeichnet, dass** dem Resolharz nach Abschluss der Resolharzsynthese 17 Gew.-% Harnstoff zugesetzt werden.

7.  Verfahren nach den vorhergehenden Ansprüchen, **dadurch gekennzeichnet, dass** der Endphenolgehalt im Harz kleiner als 0,4 Gew.-% ist.

**Revendications**

1.  Procédé de préparation de résine de résol avec de la lignine Kraft activée par polymérisation par condensation catalysée par un alcali, dans lequel la lignine Kraft est activée dans la première étape et incorporée dans une résine phénol-formaldéhyde dans la deuxième étape, de sorte que la lignine incorporée remplace partiellement le phénol, le procédé comprenant les étapes suivantes :

I) l'activation de lignine Kraft de masse molaire 4500-6000 g/mol et 60-68 % en poids de matière sèche par phénolation avec l'addition d'un catalyseur inorganique d'hydroxyde de sodium ou de potassium, dans laquelle la concentration en phénol est comprise entre 17 et 22 % en poids par rapport au poids total des composants réactionnels ajoutés, et dans laquelle l'activation de la lignine est réalisée sur une durée de 1 à 6 heures, à une température comprise entre 60 °C et 100 °C ;

II) la synthèse d'une résine de résol phénol-formaldéhyde avec de la lignine Kraft activée, la formaline étant progressivement ajoutée au mélange de la lignine activé de l'étape I) en une telle quantité que le rapport molaire du formaldéhyde au phénol est compris entre 2,3 et 3,6, et la synthèse est effectuée à une température de 55 à 70 °C, pendant une période de 4 à 18 heures, après que la synthèse de la résine de résol a été effectuée, 15 à 19 % en poids d'urée sont ajoutés sur la base du poids total de la résine de résol,

le catalyseur inorganique étant ajouté complètement à l'étape I, ou le catalyseur inorganique étant ajouté progressivement à l'étape I et à l'étape II, le catalyseur inorganique étant utilisé, à l'étape I, pour activer la lignine et, à l'étape II, en tant qu'ajout du catalyseur pour la synthèse de la résine de résol,

la quantité de catalyseur inorganique utilisée étant comprise entre 1,2 et 1,6 % en poids sur la base du poids total des composants de réaction ajoutés et de 6 à 8 % en poids sur la base du phénol,

dans lequel une résine de résol ayant une teneur finale en phénol inférieure à 1% en poids, avec une solubilité illimitée dans l'eau à 25 °C, déterminée comme indiqué dans la description par ajout de 250 mL d'eau distillée à 10 g de résine sans que la résine de résol devienne trouble, est obtenue,

et l'étape I et l'étape II étant réalisées dans le même réacteur.

2. Procédé selon la revendication 1, **caractérisé en ce que** l'étape I comprend en outre l'utilisation d'eau ou de méthanol, le pourcentage en poids de méthanol étant dans la plage de 10 à 12 % en poids sur la base du poids total des composants de réaction ajoutés, et l'eau ou le méthanol étant partiellement ou complètement éliminé après l'activation de la lignine Kraft, c'est-à-dire avant l'étape II, par distillation sous vide.

3. Procédé selon les revendications précédentes, **caractérisé en ce que** le catalyseur inorganique est l'hydroxyde de sodium, de préférence une solution aqueuse de NaOH à 50 % en poids.

4. Procédé selon les revendications précédentes, **caractérisé en ce que** l'activation de la lignine dans l'étape I est réalisée pendant 3 heures à une température d'environ 70 °C, dans lequel la concentration de phénol est de 18 % en poids sur la base du poids total des composants de réaction ajoutés.

5. Procédé selon les revendications précédentes, **caractérisé en ce que** dans l'étape II, le rapport molaire formaldéhyde : phénol est de 3,2 et la synthèse est effectuée à une température de 60 °C pendant une période comprise entre 6 et 8 heures.

6. Procédé selon les revendications précédentes, **caractérisé en ce que** 17 % en poids d'urée sont ajoutés à la résine de résol après l'achèvement de la synthèse de résine de résol.

7. Procédé selon les revendications précédentes, **caractérisé en ce que** la teneur finale en phénol dans la résine est inférieure à 0,4 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 19884769434 A
- WO 2016057390 A1
- WO 2018205020 A1
- US 201810160823 B2
- US 20190233570 A1, A. Maiorana, S. Maddipatla Venkata, G. Viswanathan
- US 201910266633 B2
- US 19693428593 A, Harold P. Higginbottom and John R. Le Blanc
- US 19774028367 A, Harold P. Higginbottom
- US 19884757108 A, W.R. Wallsser
- WO 19981998053001 A1
- US 19985795934 A, Claude P. Parks
- WO 19971997000900 A1, Gaoming Wu
- US 20056906130 B2
- US 20107741406 A
- CN 107699173
- EP 3783008 A

### Non-patent literature cited in the description

- **A. PAYEN**. Mémoire sur la congélation des pommes de terre. *Mémoire sur la congélation des pommes de terre, Huzard*, 1795-1871
- **P.J. DE WILD**. *XV Meeting of the International Humic Substances Society*, 2010, 1-27
- Phenolic Resins: A Century of Progress. Springer, 2010, 228
- Chemical pulping Processes: Sections 4.1-4.2.5.. **H. SIXTA**. Handbook of Pulp.. Wiley-VCH Verlag GmbH, 2008, 109-229
- **J. PODSCHUN**. *ACS Sustainable Chem. Eng.*, 2015, vol. 3, 2526-2532
- **X. JIANG**. *ACS Sustainable Chem. Eng.*, 2018, vol. 6, 5504-5512
- **M. GHORBANI** ; **F. LIEBNER** ; **H.W.G. VAN HERWIJNEN** ; **P. SOLT** ; **J. KONNERTH**. *Eur. J. Wood Prod.*, 2018, vol. 76, 251-258
- **P. SOLT**. *Polymers*, 2018, vol. 10, 1162
- **L. GAN** ; **X. PAN**. *Ind. Eng. Chem. Res.*, 2019, vol. 58, 7794-7800
- **L. GAN** ; **X. PAN**. *Ind. Eng. Chem. Res.*, 2019, vol. 58 (19), 7794-7800
- **X. PAN**. *J. Agric. Food Chem.*, 2006, vol. 54, 5806-5813
- **X. PAN**. *J. Agri. F. Chem.*, 2006, vol. 54 (16), 5806-5813